# EUROPÄISCHE PATENTANMELDUNG

(11) **EP 2 703 342 A1**
(43) Veröffentlichungstag der Anmeldung: **05.03.2014**
(21) Anmeldenummer: 12807987.8
(22) Anmeldetag: 29.06.2012
(51) Int. Cl.: C01B 3/56, B01D 53/02, F17C 11/00

(54) **HÜLLEN- UND RÖHRENMODUL FÜR EINEN MIT HYBRIDER THERMOSORPTION ARBEITENDEN WASSERSTOFFABSCHEIDER UND VERDICHTER**

(30) Priorität: 04.07.2011 RU 2011127136
(71) Anmelder: Obshchestvo S Ogranichennoy Otvestvennostyu "Promyshlennyye Vodorodnyye Tekhnologii Inzhenering", Moscow 123056 (RU); Obschestvo S Ogranichennoi Otvestvennostyu "Lukoil-Nizhegorodsky Nauchno-Issledovatelskii I Proektnii Institut Po Pereraboteke Nefti", Nizhny Novgorod 603950 (RU)
(72) Erfinder: BAICHTOK, Yuli Kivovich, Moscow 123154 (RU); AVETISOV, Alexandr Konstantinovich, Moscow 117208 (RU); BARANOV, Yury Mikhailovich, Balashikha 143900 Moskovskaya obl. (RU); TELYASHEV, Raushan Gumerovich, Moscow 121552 (RU); MORDKOVICH, Vladimir Zalmanovich, Moscow 117209 (RU); SUVORKIN, Sergey Vyacheslavovich, 144007 (RU); OBRYVALINA, Anna Nikolaevna, Moscow 125412 (RU); DUDAKOVA, Nataliya Vladimirovna, Moscow 107589 (RU); KOSAREV, Gennady Vladimirovich, Moscow 111555 (RU); KOSTIKOV, Nikolai Anatolievich, Moscow 107370 (RU)
(74) Vertreter: Jeck, Anton
(86) Internationale Anmeldenummer: PCT/RU2012/000522
(87) Internationale Veröffentlichungsnummer: WO 2013/006091

(57) **Zusammenfassung**

Die Erfindung betrifft die Energiewirtschaft und den chemischen Anlagenbau und kann in der Chemieindustrie, petrolchemischen Industrie, Hüttenindustrie, in der Lebensmittelindustrie und in anderen Industriebranchen eingesetzt werden. Ein liegendes Bündelrohrmodul eines Hydrid-Thermosorptionsabscheider-Wasserstoffspeichers/-verdichters weist einen Mantel und rohrförmige Sorptionselemente auf, wobei die Sorptionselemente in Form eines Zylinders mit einem darin eingefüllten pulverartigen Wasserstoffsorptionsmittel auf der Basis von intermetallischen reversible Hydride bildenden Verbindungen ausgebildet sind, sowie rohrförmige porige Gasverteilungsvorrichtungen. Das Rohr-Sorptionselement weist einen Innenzylinder auf. Das Wasserstoffsorptionsmittel befindet sich im Ringhohlraum zwischen dem Innenund dem Außenzylinder. Die rohrförmige porige Gasverteilungsvorrichtung ist in Form von Rohren ausgebildet, die an einem Ende verschlossen und mit Rohrsammlern verbunden sind und im oberen und im unteren Teil des Sorptionselements liegen, um das Mischgas zuführen und Wasserstoff und Restgas abführen zu können. Die Erfindung erlaubt, ein hochleistungsfähiges Bündelrohrmodul eines HydridThermosorptionsabscheider-Wasserstoffspeichers/-verdichters herzustellen, welches eine Erzeugung von reinem Wasserstoff unter Hochdruck sicherstellt.

## Beschreibung

Die Erfindung betrifft ein liegendes Bündelrohrmodul eines Hydrid-Thermosorptionsabscheider-Wasserstoffverdichters nach dem Oberbegriff des Anspruchs.

Die Erfindung ist im chemischen Anlagenbau und zwar für Einrichtungen zur Wasserstofffreisetzung aus Mischgasen unter gleichzeitiger Wasserstoffverdichtung dank des Einsatzes von reversiblen Hydriden intermetallischer Verbindungen einsetzbar.

Die Wasserstoffaufnahme aus einem Mischgas erfolgt dank der Bildung von einem Hydrid Intermetallid, wobei die Reaktionswärme bei einer Temperatur von 20 - 50° C ableitbar ist. Reiner Wasserstoff wird dabei unter Hochdruck bei einer Hydridzersetzung durch Wärmezufuhr bei einer Temperatur von 85 - 130° C erzeugt.

Die Einrichtung kann in der Chemieindustrie, petrolchemischen Industrie, Hüttenindustrie, in der Elektronik sowie in der Lebensmittelindustrie eingesetzt werden.

Der Prototyp dieser Einrichtung ist eine Wasserstoffspeicherungsvorrichtung nach dem Erfinderzertifikat UdSSR 1837694, 24.09.1970, Kl. F17c 11/00.

Diese Einrichtung beschreibt ein horizontales Bündelrohraggregat mit einem Mantel. Im Mantel befinden sich rohrförmige Sorptionselemente, die mit einem pulverartigen Wasserstoff-Sorptionsmittel auf der Basis von intermetallischen Verbindungen gefüllt sind. In die Sorptionselemente sind porige rohrförmige Gasverteilungsvorrichtungen eingebaut, die längsüber im unteren und im oberen Teil des Sorptionselements angeordnet sind. Die Gasverteilungsvorrichtungen sind außerhalb der Sorptionselemente hinausgeführt und zu Rohrsammlern zusammengeschlossen.

Bei einer Wasserstoffsorption und -desorption wird dementsprechend ein kalter und heißer Wärmeträger ab und zu dem Rohrzwischenraum zwischen dem Mantel und der Außenfläche der rohrförmigen Sorptionselemente zugeführt.

Die im Prototyp vorgeschlagene technische Lösung ist durch einige wesentliche Mängel gekennzeichnet, welche eine verminderte Leistungsfähigkeit der Anlage sowie eine Erhöhung ihres Preises bedingen.

Der Preis eines Hydrid-Thermosorptionsabscheider-Wasserstoffverdichters ist zu 70 bis 90 % durch den Preis des darin eingefüllten Intermetallids bestimmt. Deswegen ist die Reduzierung des Umschaltspiels der Sorptionsmodule praktisch proportional der spezifischen Investitionskostensenkung oder der Leistungssteigerung.

Da der Hydridbildungsvorgang von einem beachtlichen Wärmeeffekt von ∼ 6, 5 - 7 kKal/Mol H₂ begleitet ist, dient die thermische Geschwindigkeit in der Sorptionsmittelschicht als Hemmungsstufe des Wasserstoffsorptionsvorgangs [1].

Somit wird die Dauer des Sorptions-Desorptionszyklus durch die Wärmedurchgangsintensität in der Sorptionsmittelschicht bestimmt. Sie hängt von der Dicke der Sorptionsschicht ab. Der im Prototyp vorgeschlagene Aufbau des Rohr-Sorptionsmoduls ist durch eine Schichtdicke gekennzeichnet, die einem Halbinnendurch-messer des Rohrmoduls gleich ist.

Es ist Aufgabe der Erfindung, die Anlagekosten zu senken und ihre Leistungsfähigkeit zu erhöhen

Die gestellte Aufgabe wird durch die Merkmale des Anspruchs gelöst.

Dieses Ziel wird durch die Steigerung der thermischen Geschwindigkeit dank der Verminderung der Sorptionsschichtdicke bei gleicher Sorptionsmittelmenge pro Längeneinheit des Sorptionselements erfüllt. Dies ist durch die Herstellung eines rohrförmigen Sorptionselements erreicht. Das rohrförmige Sorptionselement ist in der Form von koaxialen Zylindern ausgebildet, wobei in dem Ringraum dazwischen Sorptionsmittel eingefüllt ist..
Die Erfindung wird anhand eines in der Zeichnung dargestellten Ausführungsbeispiels näher erläutert. Es zeigt:

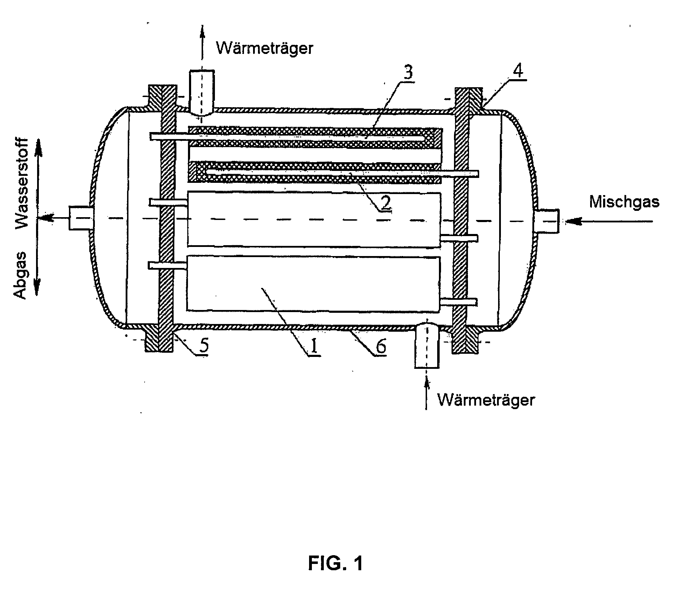

Fig. 1 im Längsschnitt ein Bündelrohrmodul eines Hydrid-Thermosorptionsabscheider-Wasserstoffverdichters.

Das waagerecht angeordnete Sorptionsmodul schließt sieben rohrförmige Sorptionselemente 1 ein. In jedem dieser Sorptionselemente 1 sind jeweils zwei porige rohrförmige Gasverteilungsvorrichtungen 2 und 3 eingebaut. Die Gasverteilungsvorrichtungen 2 und 3 sind über Rohrplatten 4 und 5 in Gassammler hinausgeführt. Die Sorptionselemente 1 sind innerhalb eines Mantels 6 angeordnet.

Das Rohr-Sorptionselement 1 besteht aus einem Außenzylinder mit einem Innendurchmesser von 60 mm und einem Innenzylinder mit einem Außendurchmesser von 30 mm. Intermetallid liegt im Ringhohlraum dazwischen.

Die Sorptionsmittelschichtdicke beträgt in diesem Sorptionselement 1 15 mm bei einem Volumen von ∼ 212 cm³ pro Längeneinheit von 100 mm.

Zum Vergleich: Das Sorptionselement 1 mit einem Innendurchmesser von 50 mm nach dem Prototyp z. B. ist durch eine Schichtdicke von 25 mm bei einem Volumen von ca. 196 cm³ pro Längeneinheit von 100 mm gekennzeichnet.

Daher ist die Wärmedurchgangsintensität und folglich die Leistungsfähigkeit der Anlage nach der Erfindung bei gleichem Temperaturverlauf und bei gleicher spezifischer Wärmeleitfähigkeit der Schicht ca. 1,5-fach höher als die des Prototyps.

Darüber hinaus ist die Wärmeaustauschfläche bei der vorgeschlagenen Konstruktionslösung 1,8-fach größer als beim Prototyp. Alles andere gleichgesetzt, sorgt diese Lösung auch für eine Kapazitätssteigerung der Anlage.

### Literatur

[1] A.L. Shilov, L.N. Paduretz, M.E. Kost. Thermodynamik von Hydriden der intermetallischen Verbindung der Übergangsmetalle. //Zeitschrift für physikalische Chemie, 1985, Band 59, Heft 8, S. 1857-1875

## Patentansprüche

1. Liegendes Bündelrohrmodul eines Hydrid-Thermosorptionsabscheider-Wasserstoffverdichters mit einem Mantel (6) mit darin eingebauten rohrförmigen Sorptionselementen (1), die mit einem pulverartigen Wasserstoff-Sorptionsmittel auf der Basis intermetallischer Verbindungen gefüllt sind, wobei die intermetallischen Verbindungen reversible Hydride bilden mit porigen rohrförmigen Gasverteilungs-vorrichtungen (2, 3), die im oberen und im unteren Teil des Sorptionselements (1) zwecks Mischgaszufuhr und Wasserstoff- und Restgasabfuhr angeordnet sind, und mit Rohrsammlern,
**dadurch gekennzeichnet,**
**dass** das Rohr-Sorptionselement (1) in Form von koaxialen Zylindern ausgebildet ist und
**dass** der Ringhohlraum dazwischen mit Sorptionsmittel gefüllt ist.
